(19) Europäisches Patentamt
European Patent Office
Office européen des brevets

(11) Numéro de publication: **0 281 864 B1**

## (12) FASCICULE DE BREVET EUROPEEN

(45) Date de publication de fascicule du brevet:
12.06.91

(51) Int. Cl.⁵: **F16L 58/18**, F22B 37/26

(21) Numéro de dépôt: 88102797.3

(22) Date de dépôt: 25.02.88

(54) **Dispositif de protection contre l'érosion-corrosion d'une paroi au contact de vapeur d'eau.**

(30) Priorité: 02.03.87 FR 8702778

(43) Date de publication de la demande:
14.09.88 Bulletin 88/37

(45) Mention de la délivrance du brevet:
12.06.91 Bulletin 91/24

(84) Etats contractants désignés:
BE DE ES FR GB IT

(56) Documents cités:
FR-A- 2 108 307

(73) Titulaire: STEIN INDUSTRIE Société Anonyme dite:
19-21, avenue Morane Saulnier
F-78140 Vélizy Villacoublay(FR)

(72) Inventeur: Peyrelongue, Jean-Pierre
2 square Francis Jammes
F-78760 Pontchartrain(FR)
Inventeur: Carpentier, François
9 Villa de la Cour Creuse
F-92140 Clamart(FR)

(74) Mandataire: Weinmiller, Jürgen et al
Lennéstrasse 9 Postfach 24
W-8133 Feldafing(DE)

## Description

La présente invention concerne une tôle d'acier à élément de protection contre l'érosion-corrosion au contact de vapeur d'eau dans une zone où elle n'est pas au contact direct de l'écoulement de cette vapeur d'eau, comprenant une tôle en métal inoxydable espacée de quelques centimètres de la tôle à protéger, notamment dans un appareil à pression tel qu'un séparateur-surchauffeur de vapeur d'eau ou une canalisation d'écoulement de vapeur.

On a en effet constaté que dans certaines zones, non balayées par la vapeur d'eau humide, il apparaissait néanmoins au bout d'un certain temps de fonctionnement une attaque de la paroi constituée de tôle d'acier non allié. Il s'agit de zones où il n'est pas possible de protéger la tôle d'acier à l'aide d'éléments rectangulaires en métal inoxydable, ou "tuiles", qui ont fait l'objet des brevets français nos 2 345 531 du 24 mars 1976 et 2 559 576 du 10 février 1984 de la Demanderesse. En particulier, même si l'on dispose au dessus de la tôle à protéger une tôle en métal inoxydable distante de quelques centimètres de la première, la protégeant du contact direct avec la vapeur d'eau humide, on constate l'apparition d'une érosion-corrosion dans la région en principe protégée par la tôle en métal inoxydable.

La présente invention a donc pour but d'assurer la protection de tôles d'acier non allié dans des zones où elles ne sont pas au contact direct de la vapeur d'eau en écoulement, notamment dans certaines régions des fonds d'un appareil à pression ou des tuyauteries.

La tôle d'acier selon l'invention est caractérisée en ce que son élément de protection comprend en outre un matelas en tricot de fils de métal inoxydable disposé entre la tôle à protéger et la tôle en métal inoxydable, de façon à remplir complétement le volume entre les tôles.

Elle répond en outre de préférence à au moins l'une des caractéristiques suivantes :

- Le matelas en tricot de fils de métal inoxydable est suffisamment comprimé entre la tôle à protéger et la tôle en métal inoxydable pour ralentir de façon très importante l'écoulement de la vapeur entre les deux tôles, afin de diminuer fortement le débit de vapeur, et capter les particules d'eau entraînées par celle-ci.
- Le matelas en tricot de fils de métal inoxydable est en outre gaufré.
- Lorsque l'on veut protéger une zone de la tôle d'acier sans possibilité d'écoulement de l'eau arrêtée par le matelas, elle comprend un piètement d'évacuation de l'eau à travers elle.

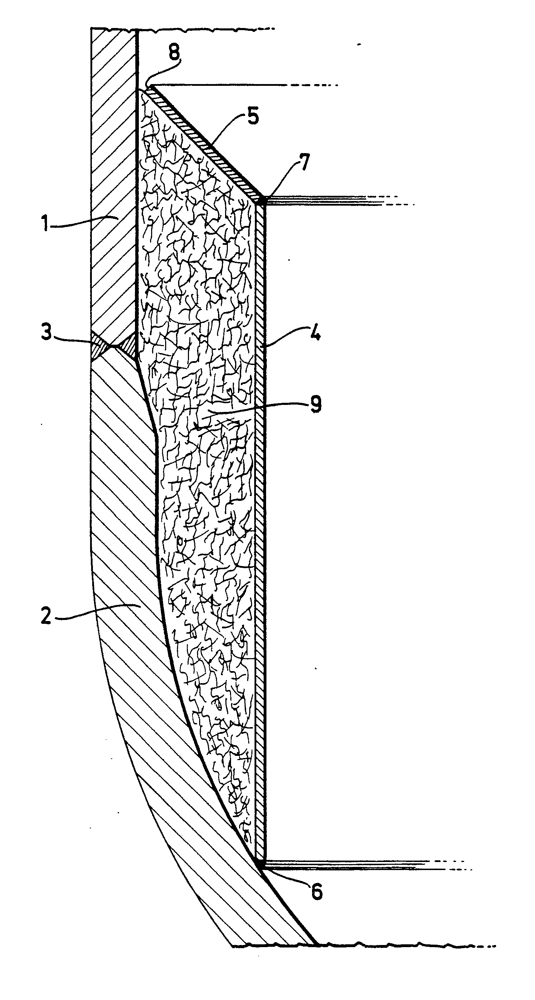

Il est décrit ci-après, à titre d'exemple et en référence à la figure unique du dessin annexé, un dispositif de protection de la tôle d'acier non allié d'un séparateur-surchauffeur de vapeur d'eau près du fond de l'arrivée de vapeur.

Le séparateur-surchauffeur comporte une virole cylindrique 1 et un fond bombé 2, tous deux en acier non allié, réunis par une soudure circulaire 3. Le dispositif de protection contre l'érosion-corrosion par la vapeur d'eau sous pression de la zone de jonction entre le fond bombé et la virole cylindrique comprend une tôle cylindrique mince 4 en acier inoxydable, soudée par un cordon de soudure 6 sur le fond bombé, et une tôle conique 5 également en acier inoxydable, soudée par le cordon de soudure 7 à la tôle 4.

La tôle 4 est à une distance de quelques centimètres de la paroi interne de la virole, et la tôle 5 se rapproche par son bord externe 8 de quelques millimètres de la paroi interne de la virole.

Il est disposé entre les parois internes en acier non allié du fond bombé et de la virole, d'une part, et les tôles de protection 4 et 5, d'autre part, un matelas 9 en tricot de fils d'acier inoxydable en plusieurs couches gaufrées pour augmenter leur cohésion, empilées et comprimées. Le diamètre de ces fils est de quelques dizièmes de millimètres.

Le matelas en tricot de fils d'acier inoxydable a pour effet de freiner la circulation de la vapeur d'eau sous pression qui s'introduit entre les tôles protectrices 4, 5 et la tôle à protéger. Il retient par capillarité les gouttelettes d'eau, qui se regroupent et ne peuvent plus être entraînées à grande vitesse le long de la tôle d'acier non allié.

## Revendications

1. Tôle d'acier à élément de protection contre l'érosion-corrosion au contact de vapeur d'eau dans une zone où elle n'est pas au contact direct de l'écoulement de cette vapeur d'eau, comprenant une tôle en métal inoxydable (4, 5) espacée de quelques centimètres de la tôle à protéger, caractérisée en ce que ledit élément comprend en outre un matelas en tricot de fils de métal inoxydable (9) disposé entre la tôle à protéger et la tôle en métal inoxydable, de façon à remplir complétement le volume entre les tôles.

2. Tôle d'acier selon la revendication 1, caractérisée en ce que le matelas en tricot de fils de métal inoxydable est suffisamment comprimé entre la tôle à protéger et la tôle en métal inoxydable pour ralentir de façon très importante l'écoulement entre les deux tôles de la vapeur, afin de diminuer fortement le débit de vapeur, et capter les particules d'eau entraînées par celle-ci.

3. Tôle d'acier selon les revendications 1 ou 2, caractérisée en ce que le matelas en tricot de fils de métal inoxydable est en outre gaufré.

4. Tôle d'acier selon la revendication 3, à élément de protection d'une zone sans possibilité d'écoulement de l'eau arrêtée par le matelas, caractérisée en ce qu'elle comporte un piètement d'évacuation de l'eau à travers elle.

**Claims**

1. A steel sheet fitted with an element for protecting against erosion-corrosion by steam in a zone where it is not in direct contact with the steam flow, comprising a stainless metal sheet (4, 5) spaced a few centimeters away from the sheet to be protected, characterized in that said element further comprises a mat of knitted stainless metal wire (9) disposed between the sheet to be protected and the sheet of stainless metal, such as to completely fill the volume between said sheets.

2. A steel sheet according to claim 1, characterized in that the mat of knitted stainless metal wire is sufficiently compressed betweeen the sheet to be protected and the sheet of stainless metal to slow down very considerably the steam flow moving between the two sheets, in order to greatly reduce the steam flow rate and to capture the water droplets entrained thereby.

3. A steel sheet according to claim 1 or 2, characterized in that moreover the mat of knitted stainless metal wire is embossed.

4. A steel sheet according to claim 3, with an element for protecting a zone without provision for the water retained by the mat to run off,characterized in that it includes an underframe for evacuating the water therethrough.

**Ansprüche**

1. Stahlblech mit Schutzelement gegen Erosion und Korrosion bei Kontakt mit Wasserdampf in einer Zone, in der es nicht direkt mit der Strömung des Wasserdampfs in Berührung kommt, wobei es ein Blech aus rostfreiem Metall (4, 5) aufweist, das einige Zentimeter von dem zu schützenden Blech entfernt angeordnet ist, dadurch gekennzeichnet, daß das Element weiter eine Strickgewebe-Matte aus rostfreien Metallfäden (9) aufweist, die zwischen dem zu schützenden Blech und dem Blech aus rostfreiem Metall angeordnet ist und den Raum zwischen den Blechen vollständig ausfüllt.

2. Stahlblech nach Anspruch 1, dadurch gekennzeichnet, daß die aus einem rostfreien Metallfaden bestehende Strickgewebematte ausreichend zwischen dem zu schützenden Blech und dem Blech aus rostfreiem Metall zusammengepreßt ist, um die Dampfströmung zwischen den beiden Blechen sehr stark zu verlangsamen, so daß der Dampfdurchsatz stark vermindert und die vom Dampf mitgenommenen Teilchen abgefangen werden.

3. Stahlblech nach den Ansprüchen 1 oder 2, dadurch gekennzeichnet, daß die aus einem rostfreien Metallfaden bestehende Strickgewebematte zusätzlich eine Prägung aufweist.

4. Stahlblech nach Anspruch 3 mit Schutzelement für eine Zone, in der keine Ablaufmöglichkleit für das durch die Matte festgehaltene Wasser besteht, dadurch gekennzeichnet, daß die Zone einen Untersatz aufweist, durch den das Wasser abgeführt wird.